# FASCICULE DE BREVET EUROPEEN

(11) **EP 0 398 820 B1**
(45) Date de publication et mention de la délivrance du brevet: **22.09.1993**
(21) Numéro de dépôt: 90420216.5
(22) Date de dépôt: 03.05.1990
(51) Int. Cl.: C12H 1/18, F28F 21/00

(54) **Dispositif et équipement d'échange thermique avec agitation**
Vorrichtung und Ausstattung zum Wärmeaustausch
Device and equipment for thermal exchange including agitation means

(30) Priorité: 10.05.1989 FR 8906395
(43) Date de publication de la demande: 22.11.1990
(73) Titulaire: THERMIQUE GENERALE ET VINICOLE, F-69480 Anse (FR); Laude-Bousquet, Adrien, F-69480 Anse (FR)
(72) Inventeur: Laude-Bousquet, Adrien, F-69480 Anse (FR)
(74) Mandataire: Guerre, Dominique

(56) Documents cités:
- EP-A- 0 251 944
- FR-A- 2 570 389
- FR-A- 2 597 587
- US-A- 1 741 727

## Description

La présente invention concerne à la fois un dispositif d'échange thermique avec un milieu liquide, et un équipement complet d'échange thermique incorporant un tel dispositif.

La présente invention est exposée, décrite et explicitée par référence au traitement des vins, et plus précisément de leur clarification; mais il doit être entendu que l'invention n'est pas limitée à ce domaine particulier d'application, et peut être mise en oeuvre dans bien d'autres domaines ou circonstances, dès lors qu'il s'agit d'échanger de la chaleur avec un milieu liquide, c'est-à-dire refroidir et/ou réchauffer ce dernier.

En ce qui concerne la clarification des vins, il s'agit notamment de séparer ou éliminer les particules de tartre en suspension, préalablement à l'embouteillage du vin. Ces particules consistant en différents sels d'acide tartrique sont en effet susceptibles de se déposer dans le fond des bouteilles, ce qui nuit à la bonne présentation des mêmes bouteilles, et ce qui ne plait pas au consommateur, même si le tartre en question n'altère en aucune manière les qualités organoleptiques des vins.

On procède à cette clarification par l'action du froid, essentiellement selon trois procédés.

Un premier procédé, dit de stabulation, consiste à refroidir le vin, sans agitation, à une température proche, mais au-dessus de son point de congélation. Ce refroidissement provoque la précipitation des sels tartriques, lesquels sont séparés par simple décantation.

Un deuxième procédé, dit contact, consiste à refroidir le vin à une température un peu plus élevée que la température de traitement du procédé précédent, voisine de 0°C, et à saturer préalablement le vin traité avec des sels de tartre dits "crème de tartre". Ces deux actions entraînent la précipitation du tartre.

Un troisième procédé, dit continu, consiste à refroidir le vin à une température proche de son point de congélation, et à l'agiter en continu, de manière a favoriser la nucléation des sels de tartre, et donc leur précipitation.

Conformément au document FR-A-2 597 587, pour réguler la température des moûts de raisins au cours de leur fermentation, on a proposé un dispositif d'échange thermique comprenant:
- un support fixe, pouvant être posé par son socle au fond d'une cuve de fermentation, comprenant deux plaques rectangulaires disposées à angle droit, sous forme de croisillon ; les bords longitudinaux externes des plaques comprennent des encoches espacées les unes des autres
- une structure cylindrique d'échange thermique, montée sur le support fixe, ayant la forme d'une paroi permettant le passage du liquide contenu par la cuve ; à cette fin, cette structure cylindrique consiste en un conduit plastique de circulation d'un fluide d'échange thermique, selon la hauteur de ladite structure, d'une entrée à une sortie ; et le conduit est enroulé sous la forme d'un serpentin, dont les spires successives non jointives sont reçues dans les différentes encoches du support.

Un dispositif tel que décrit précédemment ne convient pas à la clarification du vin, pour plusieurs raisons.

Une première raison a trait à la formation de glace sur les parois de la structure d'échange thermique, ou échangeur, au contact du vin. Ceci nécessite d'associer à l'échangeur un dispositf de raclage, ce qui rend leur agencement relativement compliqué et peu maniable.

Une deuxième raison a trait au fait que le dispositif proposé ne permet pas tout à la fois, et au choix de l'utilisateur, un refroidissement efficace favorisant la précipitation, et/ou une agitation évitant la formation de glace, mais surtout provoquant la nucléation des cristaux de tartre.

S'agissant du détartrage des vins, mais de manière non limitée à cette application, la présente invention a pour objet un dispositif d'échange thermique permettant à l'utilisateur d'employer selon son choix les trois procédés de détartrage précédemment exposés.

Selon la présente invention, en combinaison :
- d'une part, la structure cylindrique ou tubulaire d'échange thermique est suspendue au support, adapté par exemple pour être disposé dans l'ouverture supérieure d'un récipient, par exemple une cuve de vin, et est suffisamment souple pour permettre un mouvement dans le bain liquide de l'ensemble de ladite structure
- et d'autre part, un moyen d'agitation tel qu'un moteur immergé avec hélice d'agitation dans un plan horizontal, est suspendu à la partie basse de ladite structure, pour assurer une circulation entre l'intérieur et l'extérieur de ladite structure.

Un tel dispositif apporte les avantages essentiels suivants, lorsque le moyen d'agitation est en fonctionnement.

D'une part, la suspension du moyen d'agitation au manchon souple de la structure d'échange thermique, permet non seulement d'agiter le liquide localement, mais aussi d'imprimer un mouvement aléatoire à l'ensemble de la structure d'échange thermique, suspendue au support. Ce mouvement d'ensemble permet d'agiter efficacement tout le milieu liquide, ce qui accroît l'efficacité du refroidissement, mais aussi évite la formation de glace.

D'autre part, l'agitation locale, proche du fond de la cuve, permet de balayer complètement cette dernière et de remettre en suspension les particules de tartre déjà décantées, ou préalablement déposées au fond de la cuve. Ces particules constituent autant de germes de cristallisation du tartre restant en suspension dans le vin.

Un dispositif selon l'invention permet d'utiliser tous les procèdés de détartrage traditionnels décrits précédemment. En particulier, dans un premier temps, l'utilisateur peut descendre la température de la cuve avec agitation, et dans un deuxième temps, sans agitation, maintenir la basse température atteinte, pour décanter le tartre formé dans le premier temps.

Pour terminer, la configuration en hauteur, et la conformation souple du dispositif d'échange thermique selon l'invention permettent d'insérer ce dernier directement dans les cuves, y compris par des ouvertures étroites.

La présente invention est maintenant décrite par référence aux dessins annexés, dans lesquels :
- la figure 1 représente de manière schématique, et en fonctionnement, un équipement d'échange thermique conforme à la présente invention, incorporant un dispositif d'échange selon cette dernière
- la figure 2 représente, toujours de manière schématique, la configuration d'un équipement d'échange thermique selon l'invention
- la figure 3 représente, toujours de manière schématique, un autre dispositif d'échange thermique conforme à l'invention.

Un équipement selon l'invention comporte les éléments principaux suivants :
- un dispositif d'échange thermique 1, immergé pour l'essentiel dans du vin 2 stocké dans une cuve 3 comportant à sa partie supérieure une ouverture 3a
- une source frigorifique externe désignée de manière générale par la référence numérique 4
- un circuit 5 fermé de circulation d'un fluide intermédiaire caloporteur, bouclé sur le dispositif 1 d'échange thermique
- un échangeur 6 de chaleur, distinct et extérieur au dispositif 1 d'échange thermique, assurant un transfert de chaleur, de chaud ou de froid, entre le fluide caloporteur et la source frigorifique externe 4, décrite ci-après.

Le dispositif 1 d'échange thermique comprend quant à lui les éléments essentiels suivants :
- un support 7, sous la forme d'une simple plaque, adapté pour être disposé dans l'ouverture supérieure 3a du récipient ou cuve 3 ; cette plaque comporte une entrée 8 et une sortie 9 pour le fluide d'échange thermique, et plus précisément le fluide caloporteur circulant dans le circuit fermé 5 ; la plaque 7 peut faire office de fermeture ou porte supérieure de la cuve 3, quand le dispositif 1 est immergé dans la charge de vin 2,
- une structure tubulaire ou cylindrique 10, souple, d'échange thermique, montée et suspendue sur le support 7 ; cette structure s'étend en hauteur à partir de ce dernier, vers le bas ; la paroi 10a de cette stucture permet le passage du vin, et comporte au moins un conduit 11 de circulation du fluide caloporteur, selon la hauteur de la structure 10, de l'entrée 8 à la sortie 9 du support 7
- un moyen d'agitation 12, fixé et suspendu à la partie basse de la structure cylindrique 10, assurant une circulation du vin, entre l'intérieur et l'extérieur de la même structure 10 ; ce moyen comporte de manière traditionnelle un moteur électrique d'entraînement 13, commandé électriquement, et une pale 14 d'agitation, disposée dans un plan horizontal, au niveau de l'extrémité basse de la structure 10.

La structure 10 cylindrique et souple est obtenue à partir d'au moins un tube 11 continu, conformé en serpentin à spires non jointives, de la partie haute à la partie basse de la structure 10. Ce tube est constitué par un matériau plastique semi-rigide, tel que le polyéthylène haute densité et réticulé, présentant une neutralité par rapport au vin traité, et préservant les propriétés organoleptiques de ce dernier. Le tube 11 communique à une extrémité avec l'entrée 8, et à l'autre extrémité avec la sortie 9 du fluide caloporteur. La même structure peut être formée de plusieurs tubes 11 montés en parallèle, enroulés ensemble sous forme de spirales à la fois descendante et remontante, pour former ainsi deux épaisseurs de tubes selon la hauteur de la structure 10.

Le circuit fermé 5 de circulation du fluide intermédiaire, peut être constitué à la fois par des tubes rigides et souples, isolés thermiquement ou non. Le fluide caloporteur choisi est un mélange d'eau et d'éthanol, ne présentant aucun inconvénient en cas de fuite accidentelle dans la charge de vin 2 présente dans la cuve 3. La quantité totale de fluide caloporteur est d'environ 10 à 15 litres, selon les modèles. La sortie 9 du support 7 est reliée à l'entrée 6a de l'échangeur 6, tandis que la sortie 6b de ce dernier est relié à l'entrée 8 du même support, par l'intermédiaire d'une pompe 14 de circulation, et d'un ballon 15 de stockage intermédiaire. Ce ballon peut comporter une résistance de chauffage 16, dans le cas où l'on souhaite assurer également un chauffage du vin 2 stocké dans la cuve 3, par le même dispositif d'échange thermique 1. L'échangeur de chaleur 6 est du type échangeur à plaques. Le circuit fermé 5 communique également avec un vase d'expension (50) fermé, à structure souple et élastique, permettant d'absorber les dilations du fluide caloporteur. Grâce à ce vase, le circuit caloporteur ne se trouve jamais sous forte pression.

Le groupe ou source frigorifique 4 a une structure traditionnelle, et comporte :
- un compresseur 17
- un échangeur 18 de condensation, refroidi à l'air par des ventilateurs 19
- un échangeur 20 liquide-vapeur, permettant de sous-refroidir le liquide condensé avant sa détente
- un détendeur 21 du liquide condensé, lequel est ensuite vaporisé dans l'échangeur 6 par échange avec le liquide caloporteur du circuit ; le liquide vaporisé est ensuite aspiré dans le compresseur 17, après son passage dans l'échangeur 20
- un circuit de by-pass 22, permettant d'introduire directement une certaine quantité du gaz comprimé à l'entrée de l'échangeur 6 ; ce circuit 22 comporte un détendeur 23, et un régulateur 24, permettant d'adapter la capacité frigorifique aux besoins en froid dans le dispositif d'échange thermique 1.

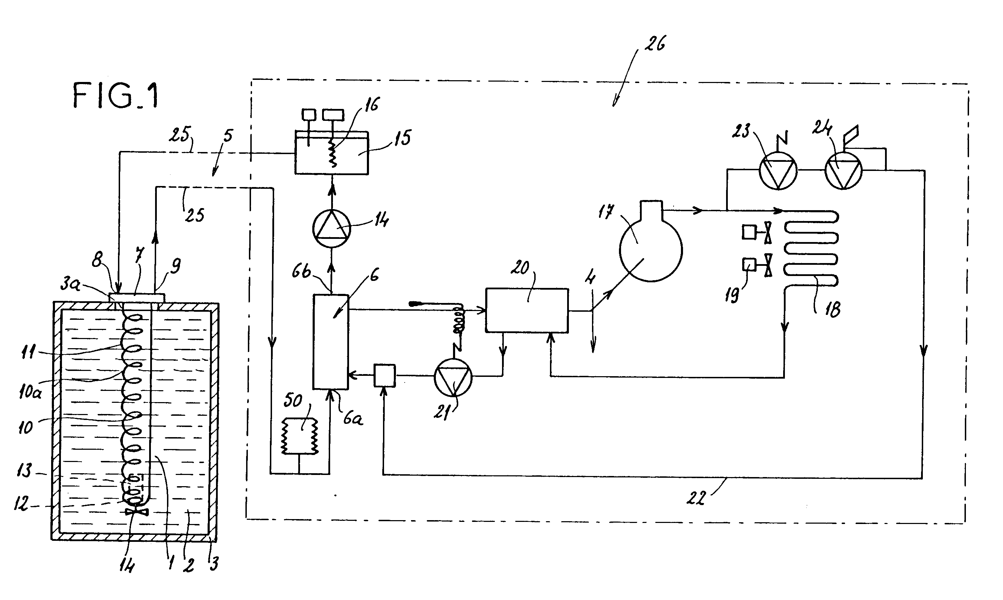

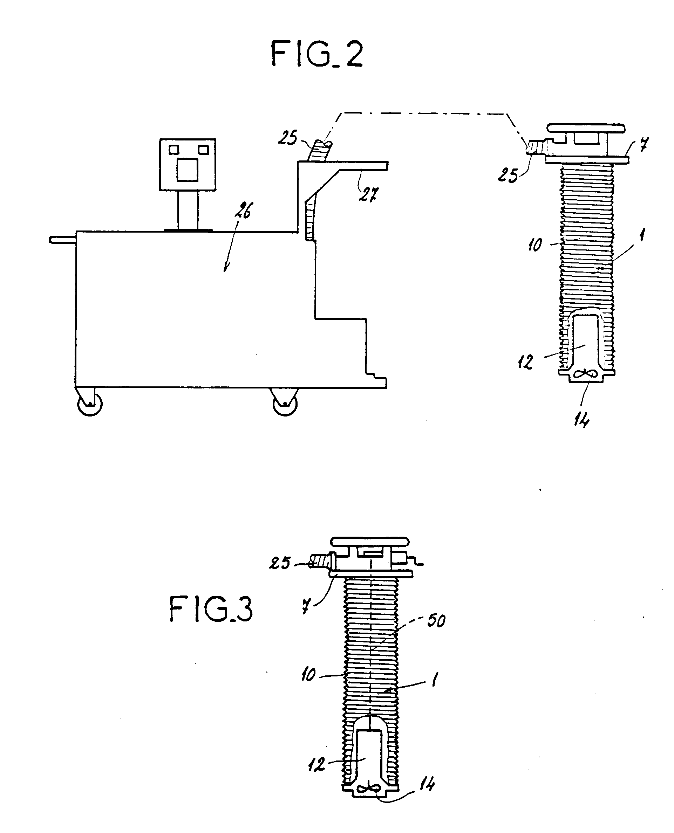

En pratique, un équipement de refroidissement ou échange thermique selon l'ivention est composé d'une partie mobile 26, sur roulettes, incorporant le groupe frigorifique 4, l'échangeur thermique 6, la pompe de circulation 14 et le ballon 15, et d'une autre partie portable, constituée par le dispositif 1 d'échange thermique, comme le montre la figure 2. Les éléments compris dans la partie mobile 26 ont été représentés à la figure 1 par un rectangle en traits discontinus. La partie portable 1 et la partie mobile 26 sont reliées entre elles par deux tuyaux souples 25 de liaison, isolés thermiquement, reliant respectivement l'entrée 8 du dispositif 1 avec la sortie 6b de l'échangeur 6, et la sortie 9 du même dispositif 1 avec l'entrée 6b de l'échangeur 6. La partie mobile 26 comporte un support 27 pour le dispositif d'échange thermique 1.

Un équipement selon l'invention peut être mis en oeuvre par l'utilisateur de la manière suivante.

Une fois le dispositif 1 introduit par l'ouverture 3a de la cuve 3, et le serpentin 11 à spires non jointives immergé dans le liquide ou vin 2, le moyen 12 d'agitation est mis en rotation. La pompe de circulation 14 du fluide caloporteur est mise en route après démarrage du groupe frigorifique 4. Le manchon souple constitué par le serpentin 11 permet, d'une part de balayer le fond de la cuve 2, dans tous ses recoins, grâce au courant de liquide puisé par le moyen d'agitation 12 au centre de la structure cylindrique 10, et refoulé vers le fond de la cuve 3, et d'autre part de donner à l'ensemble du dispositif 1 un mouvement aléatoire permettant de brasser l'ensemble du liquide 2. En faisant varier la vitesse de l'agitateur 12, on peut proportionner ou distinguer les phénomènes de balayage et d'agitation globale du liquide.

On obtient ainsi une descente rapide en température du vin 2, sans formation de glace, ce qui permet de travailler avec des fluides caloporteurs à très basse température, par exemple de l'ordre de - 20° C. La nature plastique du conduit 11 permet également d'éviter tout accrochage des cristaux de glace pouvant être présents dans le liquide.

Le niveau de température du fluide caloporteur circulant dans le circuit fermé 5, peut être contrôlé en régulant la puissance frigorifique du groupe 4. Cette régulation peut être obtenue de différentes manières connues en soi, par exemple par contrôle du débit circulant dans la boucle 22 de by-pass, ou par freinage de l'aspiration du compresseur 17, ou encore par variation de la puissance de ce dernier.

Le paramètre de contrôle retenu peut être la température de surface de la structure cylindrique 10 d'échange thermique ou encore la température à la sortie 6b de l'échangeur 6. Par ailleurs, toutes ces températures peuvent être programmées en fonction du cycle de fonctionnement retenu.

Une fois la température de refroidissement final atteinte, le moyen d'agitation 12 peut être arrêté. A partir de ce moment, le groupe frigorifique 4 permet de maintenir dans la cuve 2, par le dispositif d'échange thermique 1, la température optimale de précipitation du tartre, par exemple au voisinage de - 6° C pour un vin de 13°, la température du fluide caloporteur intermédiaire étant alors de - 10°C. Pendant cette phase, la vitesse de circulation du fluide caloporteur peut être régulée par un thermostat prenant la température du vin 2.

Le dispositif d'échange thermique 1 peut être équipé d'un organe de sécurité interdisant la marche du moyen d'agitation 12, lorsque le dispositif 1 est en dehors de tout liquide.

Le dispositif d'échange thermique 1 selon l'invention peut être utilisé dans les systèmes de cuves à plafond mobile, permettant de traiter des quantités variables de vin à l'abri de l'air. Ceci est rendu possible en adaptant la hauteur du serpentin 10, au moment de l'utilisation du dispositif 1 selon l'invention.

L'adaptation en hauteur du serpentin 10 peut être obtenue selon la disposition représentée à la figure 3. Selon celle-ci, d'une part la structure tubulaire d'échange thermique 10 peut être pliée ou repliée selon sa hauteur, au moins pour partie, et d'autre part un système de commande par cable 50 permet d'abaisser ou relever la partie basse de la structure tubulaire 10 à partir du support 7.

A titre de variante, dans une configuration fixe, l'échangeur 6 peut être installé à côté de la cuve, les tuyauteries du groupe frigorifique 4 alimentant l'échangeur 6. De ce fait, le volume du fluide caloporteur circulant dans la boucle intermédiaire 5 peut être réduit.

## Revendications

1. Dispositif d'échange thermique avec un bain liquide contenu dans un récipient, comprenant:
- un support (7)
- une structure tubulaire (10) d'échange thermique, montée sur le support, la paroi (10a) de cette structure permettant le passage du liquide (2), et comportant au moins un conduit (11) de circulation du fluide d'échange thermique, selon la hauteur de ladite structure, d'une entrée (8) à une sortie (9)
caractérisé en ce que d'une part la structure tubulaire (10) d'échange thermique est suspendue au support (7) et est suffisamment souple pour permettre un mouvement dans le bain liquide de l'ensemble de ladite structure, et d'autre part un moyen (12) d'agitation est suspendu à la partie basse de la structure tubulaire, pour assurer une circulation entre l'intérieur et l'extérieur de ladite structure.

2. Dispositif selon la revendication 1, caractérisé en ce que le support (7) est adapté pour être disposé dans une ouverture supérieure (3a) du récipient.

3. Dispositif selon la revendication 1, caractérisé en ce que d'une part la structure tubulaire d'échange thermique (10) peut être pliée et repliée selon sa hauteur, et d'autre part un système de commande par câble (50) permet d'abaisser ou relever la partie basse de la structure tubulaire (10), à partir du support (7).

4. Dispositif selon la revendication 1, caractérisé en ce que le support (7) consiste en une plaque pouvant être posée sur la bordure (3a) de l'ouverture supérieure du récipient (3).

5. Equipement d'échange thermique, comprenant un dispositif selon l'une quelconque des revendications 1 à 4, caractérisé en ce qu'il comporte en outre un circuit (5) fermé de circulation d'un fluide intermédiaire caloporteur, bouclé sur le dispositif d'échange thermique, et un échangeur (6) de chaleur, distinct et extérieur au dispositif d'échange thermique, assurant un transfert de chaleur entre le fluide caloporteur et une source thermique externe (4).

6. Equipement selon la revendication 5, caractérisé en ce que le circuit fermé comporte deux tuyaux (25) souples de liaison, isolés thermiquement, reliant respectivement l'entrée (8) du dispositif d'échange thermique avec la sortie (6b) de l'échangeur, et la sortie (9) du même dispositif avec l'entrée (6a) de l'échangeur.

7. Equipement selon la revendication 5, caractérisé en ce que le fluide intermédiaire caloporteur comprend de l'éthanol.

8. Equipement selon la revendication 5, caractérisé en ce que la source thermique (4) externe est un groupe frigorifique, l'échangeur de chaleur (6) assurant un transfert de froid du fluide frigorigène du groupe au fluide caloporteur.

9. Equipement selon la revendication 8, caractérisé en ce qu'il est composé d'une partie mobile (26) incorporant le groupe frigorifique (4) et l'échangeur de chaleur (6), et d'une autre partie portable constituée par le dispositif d'échange thermique (1).

10. Equipement selon la revendication 9, caractérisé en ce que la partie mobile (26) comporte un support pour le dispositif d'échange thermique.

## Patentansprüche

1. Vorrichtung zum Wärmeaustausch mit einem in einem Behältnis aufgenommenen flüssigen Bad, mit
- einem Träger (7),
- sowie mit einem am Träger befestigten tubusförmigen Wärmetauschaufbau (10), wobei die Wand (10a) des Aufbaus den Durchtritt der Flüssigkeit (2) erlaubt, und der zumindest eine Leitung (11) zum Zirkulieren eines Wärmeaustauschfluids längs der Höhe des Aufbaues von einem Einlaß (8) zu einem Auslad (9) aufweist,
dadurch gekennzeichnet, daß zum einen der tubusförmige Wärmetauschaufbau (10) am Träger (7) hängend angebracht ist und daß dieser eine ausreichende Biegsamkeit aufweist, so daß der Zusammenbau des genannten Aufbaus sich im Flüssigkeitsbad bewegen kann, und daß zum anderen Rührmittel (12) am unteren Abschnitt des tubusförmigen Aufbaus hängend angebracht sind, um eine Zirkulation zwischen dem Äußeren und dem Inneren des Aufbaus sicherzustellen.

2. Vorrichtung nach Anspruch 1, dadurch gekennzeichnet, daß der Träger (7) derart ausgestaltet ist, daß er in einer oberen Öffnung (3a) des Behältnis angeordnet werden kann.

3. Vorrichtung nach Anspruch 1, dadurch gekennzeichnet, daß der tubusförmige Wärmetauschaufbau (10) zum einen längs seiner Höhe eingezogen und ausgefahren werden kann, und daß andererseits ein Seilsteuersystem (50) es ermöglicht, den unteren Abschnitt des tubusförmigen Aufbaus, ausgehend vom Träger (7), abzusenken oder anzuheben.

4. Vorrichtung nach Anspruch 1, dadurch gekennzeichnet, daß der Träger (7) aus einer Platte besteht, die auf den Rand der Öffnung (3a) des Behältnis (3) gebracht werden kann.

5. Wärmeaustauschanlage, die eine Vorrichtung nach einem der Ansprüche 1 bis 4 enthält, dadurch gekennzeichnet, daß sie darüber hinaus einen geschlossenen Kreislauf (5) eines wärmeabführenden Zwischenfluids in die Vorrichtung zum Wärmeaustausch eingeschleift aufweist, und ferner einen Wärmetauscher (6), abseits und außerhalb der Vorrichtung zum Wärmeaustausch, der einen Wärmetransport zwischen dem wärmeabführenden Fluid und einer externen Wärmequelle (4) sicherstellt.

6. Anlage nach Anspruch 5, dadurch gekennzeichnet, daß der geschlossenen Kreislauf zwei thermisch isolierte flexible Verbindungsrohre (25) aufweist, die jeweils den Einlaß (8) der Vorrichtung zum Wärmeaustausch mit dem Auslaß (6b) des Tauschers und den Auslaß (9) derselben Vorrichtung mit dem Einlaß (6a) des Tauschers verbinden.

7. Anlage nach Anspruch 5, dadurch gekennzeichnet, daß das wärmeabführende Zwischenfluid Ethanol enthält.

8. Anlage nach Anspruch 5, dadurch gekennzeichnet, daß die externe Wärmequelle (4) eine Kühlgruppe ist, wobei der Wärmetauscher (6) den Übergang von Kälte des Kühlfluids der Gruppe auf das wärmeabführende Fluidum sicherstellt.

9. Anlage nach Anspruch 8, dadurch gekennzeichnet, daß sie aus einem fahrbaren Teil (26), das die Kühlgruppe (4) und den Wärmetauscher (6) enthält und aus einem tragbaren Teil besteht, das die Vorrichtung zum Wärmeaustausch (1) bildet.

10. Anlage nach Anspruch 9, dadurch gekennzeichnet, daß das fahrbare Teil (26) einen Träger für die Vorrichtung zum Wärmeaustausch aufweist.

## Claims

1. Device for thermal exchange with a liquid bath contained in a receptacle, comprising:
- a support (7)
- a tubular thermal exchange structure (10), mounted on the support, the wall (10a) of this structure allowing passage of the liquid (2), and comprising at least one pipe (11) for circulating the thermal exchange fluid, along the height of the said structure, from an inlet (8) to an outlet (9), characterised in that, on the one hand, the tubular thermal exchange structure (10) is suspended from the support (1) and is sufficiently flexible to allow movement of the whole of the said structure in the liquid bath, and, on the other hand, an agitation means (12) is suspended from the bottom part of the tubular structure, in order to ensure circulation between the inside and the outside of the said structure.

2. Device according to Claim 1, characterised in that the support (7) is adapted to be arranged in an upper opening (3a) of the receptacle.

3. Device according to Claim 1, characterised in that, on the one hand, the tubular thermal exchange structure (10) may be folded and turned over along its height, and, on the other hand, a cable-based control system (50) makes it possible to lower or raise the bottom part of the tubular structure (10), with respect to the support (7).

4. Device according to Claim 1, characterised in that the support (7) consists of a plate which can be placed on the edge (3a) of the upper opening of the receptacle (3).

5. Thermal exchange equipment, comprising a device according to any one of Claims 1 to 4, characterised in that it furthermore comprises a closed circuit (5) for circulating an intermediate heat-exchange fluid, looped onto the thermal exchange device, and a heat exchanger (6), separate from and outside the thermal exchange device, ensuring transfer of heat between the heat-exchange fluid and an external thermal source (4).

6. Equipment according to Claim 5, characterised in that the closed circuit comprises two thermally insulated connection hoses (25), respectively connecting the inlet (8) of the thermal exchange device with the outlet (6b) of the exchanger, and the outlet (9) of the same device with the inlet (6a) of the exchanger.

7. Equipment according to Claim 5, characterised in that the intermediate heat-exchange fluid comprises ethanol.

8. Equipment according to Claim 5, characterised in that the external thermal source (4) is a refrigeration unit, the heat exchanger (6) ensuring a transfer of cold from the refrigerant fluid of the unit to the heat-exchange fluid.

9. Equipment according to Claim 8, characterised in that it is composed of a mobile part (26) incorporating the refrigeration unit (4) and the heat exchanger (6), and of another portable part consisting of the thermal exchange device (1).

10. Equipment according to Claim 9, characterised in that the mobile part (26) comprises a support for the thermal exchange device.
